(19) Europäisches Patentamt
European Patent Office
Office européen des brevets

(11) **EP 3 340 508 B1**

(12) **FASCICULE DE BREVET EUROPEEN**

(45) Date de publication et mention de la délivrance du brevet:
**24.01.2024 Bulletin 2024/04**

(21) Numéro de dépôt: **17209570.5**

(22) Date de dépôt: **21.12.2017**

(51) Classification Internationale des Brevets (IPC):
***H04L 1/00*** *(2006.01)*

(52) Classification Coopérative des Brevets (CPC):
**H04L 1/008; H04L 1/0083; H04L 1/0085**

(54) **PROCÉDÉ DE RÉCEPTION, RÉCEPTEUR, ÉMETTEUR ET SYSTÈME DE COMMUNICATION ASSOCIÉS**

EMPFANGSVERFAHREN UND ENTSPRECHENDER EMPFÄNGER, SENDER UND KOMMUNIKATIONSSYSTEM

METHOD FOR RECEIVING AND ASSOCIATED RECEIVER, EMITTER AND COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2016 FR 1601852**

(43) Date de publication de la demande:
**27.06.2018 Bulletin 2018/26**

(73) Titulaire: **Thales**
**92400 Courbevoie (FR)**

(72) Inventeurs:
• **GARRIDO, Eric**
**92622 Gennevilliers Cedex (FR)**

• **BERNARD, Olivier**
**92622 Gennevilliers Cedex (FR)**
• **ANZALA YAMAJAKO, Alexandre**
**92622 Gennevilliers Cedex (FR)**
• **DUBOIS, Renaud**
**92622 Gennevilliers Cedex (FR)**
• **GRATADOUR, Anne-Rose**
**92622 Gennevilliers cedex (FR)**

(74) Mandataire: **Lavoix**
**2, place d'Estienne d'Orves**
**75441 Paris Cedex 09 (FR)**

(56) Documents cités:
**US-A1- 2009 154 495    US-B1- 6 804 257**

**Description**

La présente invention concerne un procédé de réception d'un message diffusé en radiofréquence et réparti sur une pluralité de trames. La présente invention se rapporte également à un récepteur, à un émetteur et à un système de communication associés.

Dans le domaine de la communication radiofréquence, il est connu des émetteurs diffusant en continu pendant une session (de durée variable ou fixe), un ou plusieurs messages $M_1$, $M_2$, ..., $M_n$ à destination de récepteurs et en parallèle (multiplexage). La diffusion est possiblement sans voie de retour. Les messages $M_1$, ..., $M_n$ sont de tailles variables et peuvent correspondre à des besoins opérationnels distincts. Le partage de la bande passante pour transmettre en parallèle les différents messages est flexible, et peut varier de session en session, choisi par le centre de diffusion en fonction du besoin opérationnel. D'autre part, les conditions d'écoute des récepteurs sont variables (temps d'écoute non continu de la ligne, brouillage momentané, ...). Cela induit dans tous les cas, des délais variables pour qu'un récepteur reconstitue les messages transmis et les exploite au niveau applicatif.

Pour cela, les trames ont un format prédéfini et sont redondantes. Notamment, une partie de chaque trame est consacrée à de la signalisation.

Toutefois, lorsque le nombre de trames à recevoir pour reconstituer le message est très grand, par exemple supérieur à 100, la réception d'une trame erronée empêche de reconstituer le message global.

Pour pallier un tel problème, les trames comportent une partie d'authentification.

Néanmoins, pour les cas où la bande passante allouée pour la transmission des trames est faible, la partie d'authentification est insuffisante pour garantir qu'aucune trame erronée ne soit prise en compte par le récepteur.

Il existe donc un besoin pour un procédé de réception d'un message diffusé en radiofréquence et réparti sur une pluralité de trames permettant de garantir qu'aucune trame erronée ne soit prise en compte, sans impacter la bande passante allouée pour la transmission des trames. Les documents US 2009/154495 A1 et US 6 804 257 B1 divulguent des exemples de tels procédés.

A cet effet, il est proposé un procédé de réception d'un message diffusé en radiofréquence et réparti sur une pluralité de trames, selon la revendication 1, chaque trame ayant une taille prédéfinie et comportant trois sections distinctes, la première section étant allouée à une donnée de signalisation, une donnée de signalisation étant une fonction d'une partie de message de signalisation, la deuxième section étant allouée à une partie utile et la troisième section étant allouée à un message d'authentification, les parties de message de signalisation permettant d'obtenir un message de signalisation, le message de signalisation étant un ensemble d'informations permettant de lire la partie utile des trames pour reconstituer le message diffusé et de prévoir la partie de message de signalisation envoyée dans chaque trame, le procédé comportant au moins une étape de réception de trames initiales pour obtenir des données de signalisation, une étape de reconstitution du message de signalisation à partir des trames initiales, une étape de prévision du nombre de trames à recevoir pour reconstituer le message diffusé et de la partie de message de signalisation dans chaque trame à recevoir, une étape de réception de nouvelles trames, et, pour chaque nouvelle trame reçue, une étape de vérification du contenu de la première section de la nouvelle trame à l'aide de la partie de message de signalisation prévue.

Suivant des modes de réalisation particuliers, le procédé de réception comprend une ou plusieurs des caractéristiques suivantes, prise(s) isolément ou suivant toute combinaison techniquement possible :

- lors de l'étape de vérification, il est mis en oeuvre des étapes d'extraction de la donnée de signalisation de la nouvelle trame, pour obtenir une donnée de signalisation extraite, de calcul de la partie de message de signalisation reçue à l'aide de la fonction et la donnée de signalisation extraite, de comparaison de la partie de message de signalisation reçue avec la partie de message de signalisation prévue, pour obtenir un résultat, et de sélection des trames parmi les nouvelles trames des trames pour lesquelles le résultat est une égalité.

- lors de l'étape de vérification, il est mis en oeuvre des étapes de calcul de la donnée de signalisation prévue à l'aide de la fonction, de la partie de message de signalisation prévue et de la nouvelle trame, d'extraction de la donnée de signalisation de la nouvelle trame, pour obtenir une donnée de signalisation extraite, de comparaison de la donnée de signalisation extraite avec la donnée de signalisation prévue, et de sélection des trames parmi les nouvelles trames des trames pour lesquelles le résultat est une égalité.

- la fonction est la fonction identité.

- la fonction est une opération inversible appliquée à la partie de message de signalisation à transmettre et au résultat d'une sous-opération appliquée à une partie d'une trame.

- l'opération inversible est une opération logique de « ou exclusif ».

- la sous-opération est une sous-opération cryptographique.

- la partie d'une trame est au moins l'une parmi une partie de la deuxième section et une partie de la troisième section.

- la taille prédéfinie est inférieure ou égale à 256 bits.

- la sous-opération est un motif d'authentification cryptographique.

Il est aussi proposé un récepteur propre à recevoir un message diffusé en radiofréquence et réparti sur une pluralité de trames, selon la revendication 9, chaque trame ayant une taille prédéfinie et comportant trois sections distinctes, la première section étant allouée à une donnée de signalisation, une donnée de signalisation étant une fonction d'une partie de message de signalisation, la deuxième section étant allouée à une partie utile et la troisième section étant allouée à un message d'authentification, les parties de message de signalisation permettant d'obtenir un message de signalisation, le message de signalisation étant un ensemble d'informations permettant de lire la partie utile des trames pour reconstituer le message diffusé et de prévoir la partie de message de signalisation envoyé dans chaque trame, le récepteur étant adapté pour recevoir des trames initiales pour obtenir des données de signalisation, reconstituer le message de signalisation à partir des trames initiales, prévoir le nombre de trames à recevoir pour reconstituer le message diffusé et la partie de message de signalisation dans chaque trame à recevoir, recevoir de nouvelles trames et, pour chaque nouvelle trame reçue, vérifier le contenu de la première section de la nouvelle trame à l'aide de la partie de message de signalisation prévue.

La présente description décrit aussi un émetteur propre à diffuser un message en radiofréquence et réparti sur une pluralité de trames, selon la revendication 10, chaque trame ayant une taille prédéfinie et comportant trois sections distinctes, la première section étant allouée à une donnée de signalisation, une donnée de signalisation étant une fonction d'une partie d'un message de signalisation, la deuxième section étant allouée à une partie utile et la troisième section étant allouée à un message d'authentification, les parties de signalisation permettant d'obtenir un message de signalisation, le message de signalisation étant un ensemble d'informations permettant de lire la partie utile des trames pour reconstituer le message diffusé et de prévoir la partie de message de signalisation envoyé dans chaque trame, la fonction est une combinaison d'une opération inversible appliquée à une partie d'un message de signalisation et au résultat d'une sous-opération appliquée à une partie d'une trame.

Suivant des modes de réalisation particuliers, l'émetteur comprend une ou plusieurs des caractéristiques suivantes, prise(s) isolément ou suivant toute combinaison techniquement possible :

- l'opération inversible est une opération logique de « ou exclusif ».
- la partie d'une trame est au moins l'une parmi une partie de la deuxième section et une partie de la troisième section.
- la sous-opération est un motif d'authentification cryptographique.

La présente description décrit aussi un système de communication comportant un émetteur et au moins un récepteur tel que précédemment décrit.

Selon un mode de réalisation particulier, l'émetteur est tel que précédemment décrit.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un système de communication, et
- figure 2, une représentation schématique d'une trame échangée dans le système de communication de la figure 1.

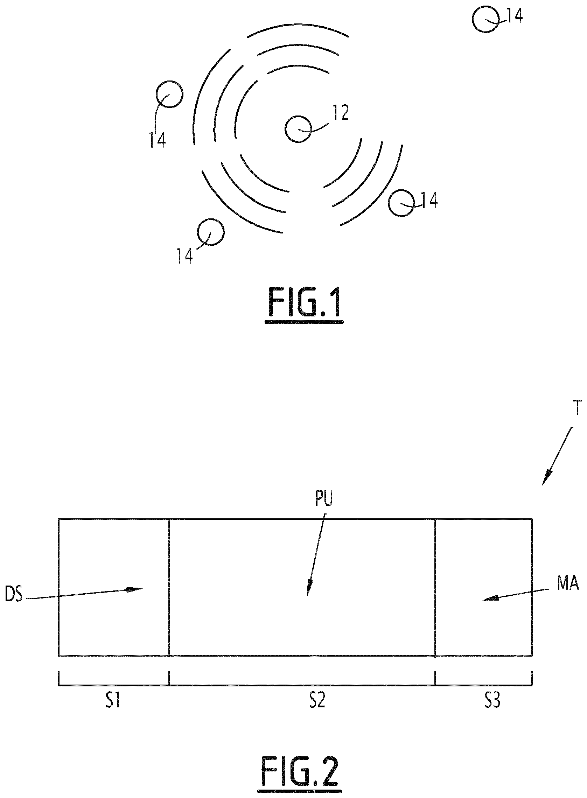

Un système de communication 10 est représenté sur la figure 1.

Le système de communication 10 est un système de type radiofréquence.

Le système de communication 10 présente un débit relativement faible, par exemple de moins de 200 bits par seconde.

Un exemple de tel système de communication 10 est, par exemple, un système de communication sous-marin ou un système de géolocalisation.

Le système de communication 10 comporte un unique émetteur 12 communiquant avec une pluralité de récepteurs 14.

L'émetteur 12 est propre à diffuser un message MD en radiofréquence sans voie de retour de la part des récepteurs 14.

Le message à diffuser MD est réparti sur une pluralité de trames T.

Un exemple d'une telle trame T est visible sur la figure 2.

Chaque trame T a une taille prédéfinie.

La taille d'une trame T est suffisamment petite pour que la probabilité de recevoir une trame T complète sans erreur soit très forte en conditions nominales.

Selon l'exemple proposé, la taille prédéfinie est inférieure ou égale à 256 bits.

Chaque trame T comporte trois sections distinctes S1, S2 et S3.

La première section S1 est allouée à une donnée de signalisation DS.

La deuxième section S2 est allouée à une partie utile PU.

La troisième section S3 est allouée à un message d'authentification MA.

Une donnée de signalisation DS est une fonction d'une partie d'un message de signalisation.

Pour la suite, la fonction est notée g, une partie d'un message de signalisation est noté PMS et le message de signalisation est noté MS.

Les parties de signalisation PMS permettent d'obtenir un message de signalisation MS.

Le nombre de parties de signalisation PMS permettant d'obtenir un message de signalisation MS est faible, typiquement moins de dix trames T sont utilisées.

Le message de signalisation MS est un ensemble d'informations.

Dans l'exemple décrit, les informations permettent de lire la partie utile PU des trames T pour reconstituer le message diffusé MD et de prévoir la partie de message de signalisation MS envoyé dans chaque trame T.

La lecture de la partie utile PU des trames T pour reconstituer le message diffusé MD donne usuellement plusieurs techniques distinctes pour assurer que le message diffusé MD soit parvenu à un récepteur 14 même dans le cas où certaines trames T ne sont pas reçues par le récepteur 14.

Par exemple, les informations comportent le nombre de messages à diffuser MD, la taille de chacun des messages à diffuser MD, la bande passante allouée à chaque message à diffuser MD.

La partie utile PU transmise dans chaque trame T est usuellement une partie d'un flux de données correspondant au message diffusé multiplexé.

Le message d'authentification MA est usuellement un motif d'authentification cryptographique suffisamment dimensionné pour pouvoir rejeter en réception les trames erronées ou grossièrement falsifiées.

Il est usuellement considéré qu'un message d'authentification MA ayant une taille supérieure ou égale à 128 bits remplit une telle condition.

Dans le cas proposé, le débit du système de communication 10 limite la taille du message d'authentification MA à une taille comprise entre 8 bits et 64 bits.

Typiquement, le message d'authentification MA présente une taille inférieure à 32 bits.

La présence du message d'authentification MA explique que le système de communication 10 est parfois qualifié de « système de communication radiofréquence sécurisé ».

En variante, la trame T comporte d'autres sections, comme une section dite « section IV » qui permet la protection en confidentialité de la trame T.

La pluralité de récepteurs 14 est propre à recevoir des trames T émises par l'émetteur 12 pour obtenir le message diffusé MD à l'aide d'un procédé de réception.

En variante, le système de communication 10 comporte une pluralité d'émetteurs 12.

Le fonctionnement du système de communication 10 est maintenant décrit en détaillant plus spécifiquement un procédé de réception mis en oeuvre par un récepteur 14.

L'émetteur 12 émet en continu des trames T ayant la même forme que la trame représentée sur la figure 2.

Par commodité et à titre d'illustration, chaque trame T est indicée par un indice noté i, i variant entre 1 et le nombre de trames totales transmises par l'émetteur 12 pour diffuser le message diffusé MD. Chaque élément de la i-ième trame $T_i$ est indicé de manière correspondante de sorte que la première section de la i-ième trame $T_i$ est notée $S1_i$.

Dans l'exemple qui suit, la fonction g est supposée être une opération inversible f appliquée à une partie d'un message de signalisation et au résultat d'une sous-opération appliquée à une partie d'une trame.

Plus précisément, l'opération inversible f est une opération logique de « ou exclusif ».

La sous-opération est de manière générale notée sous-opération CRY.

La sous-opération est, dans le cas illustré, une sous-opération cryptographique.

Pour éviter toute confusion, la sous-opération du mode de réalisation illustré est notée sous-opération cryptographique MAC dans ce qui suit.

Dans le cas présenté, la partie de la trame sur laquelle est appliquée la sous-opération cryptographique MAC est la deuxième section S2.

En variante, la partie d'une trame sur laquelle est appliquée la sous-opération cryptographique MAC est au moins l'une parmi une partie de la deuxième section S2 et une partie de la troisième section S3.

De préférence, le résultat de l'opération cryptographique MAC présente le même nombre de bits que la première section S1, de sorte que toute la première section S1 améliore la sécurité de la trame T considérée.

Dans l'exemple proposé, la sous-opération cryptographique MAC est un motif d'authentification cryptographique.

Par exemple, la sous-opération cryptographique MAC consiste en l'application de l'algorithme HMAC-SHA256 dont la sortie est tronquée pour ne garder que les t premiers bits, t étant la taille de la première section S1.

De manière générale, la sous-opération CRY n'est pas inversible sans clé, et n'est pas nécessairement inversible même avec la connaissance de la clé.

Une sous-opération CRY « sans clé » protège d'un adversaire légitime (météo) alors qu'une sous-opération CRY « avec clé » (cas de la sous-opération cryptographique MAC détaillée précédemment) protège d'un attaquant intelligent et malveillant.

Dans la suite, la sous-opération est notée CRY pour tenir compte des deux cas de figures.

Il est ainsi obtenu la relation mathématique suivante pour la i-ième trame $T_i$ :

$$DS_i = f(PMS_i, CRY(S2_i))$$

La notation précédente fait apparaître que l'opération f et la sous-opération cryptographique CRY sont les mêmes pour chaque trame T.

En variante, l'opération f et/ou la sous-opération cryptographique CRY sont spécifiques à chaque trame T, la seule restriction étant que chaque opération f et la sous-opération CRY soient connues du récepteur 14 et que chaque opération f soit inversible.

En outre, l'opération f étant inversible, il est défini sa fonction inverse $f^{-1}$ qui correspond à la relation mathématique suivante pour la i-ième trame $T_i$ :

$$PMS_i = f^{-1}(DS_i, CRY(S2_i))$$

Le récepteur 14 met alors en oeuvre un procédé de réception.

Le procédé de réception comporte une première étape de réception, une étape de reconstitution, une étape de prévision, une deuxième étape de réception et une étape de vérification.

Lors de la première étape de réception, le récepteur 14 reçoit des trames T initiales pour obtenir des données de signalisation DS.

Plus précisément, selon l'exemple illustré, le récepteur 14 reçoit les première, deuxième et troisième trames $T_1$, $T_2$ et $T_3$.

Selon un mode de réalisation préféré, le récepteur 14 met alors en oeuvre une vérification des troisièmes sections $S_3$ pour vérifier l'authenticité des première, deuxième et troisième trames $T_1$, $T_2$ et $T_3$.

Le récepteur 14 extrait alors les premiers secteurs S1 de chacune des première, deuxième et troisième trames $T_1$, $T_2$ et $T_3$.

A l'issue de la première étape de réception, le récepteur 14 a ainsi accès à la première donnée de signalisation $DS_1$, la deuxième donnée de signalisation $DS_2$ et la troisième donnée de signalisation $DS_3$.

Lors de l'étape de reconstitution, il est reconstitué le message de signalisation MS à partir des trames T initiales.

En l'occurrence, le récepteur 14 reconstitue le message de signalisation MS à l'aide de chacune des première, deuxième et troisième trames $T_1$, $T_2$ et $T_3$.

Pour cela, pour chaque trame T, le récepteur 14 extrait la deuxième section S2 et calcule le résultat de la fonction $f^{-1}$ appliquée à la donnée de signalisation DS et à la deuxième section S2 comme expliqué précédemment.

Il est ainsi obtenu la première partie de message de signalisation $PMS_1$, la deuxième partie de message de signalisation $PMS_2$ et la troisième partie de message de signalisation $PMS_3$.

L'utilisation des trois parties de message de signalisation $PMS_1$, $PMS_2$ et $PMS_3$ permet d'obtenir le message de signalisation MS.

L'obtention du message de signalisation MS a été illustrée dans un cas simple.

L'extension à des cas plus complexes est immédiate.

Par exemple, si la deuxième partie de message de signalisation $PMS_2$ n'est pas accessible car la deuxième trame $T_2$ n'a pas été reçue, il suffit d'attendre la cinquième trame $T_5$ pour reconstituer le message de signalisation MS.

Lors de l'étape de prévision, il est prévu le nombre de trames T à recevoir pour reconstituer le message diffusé MD.

Pour l'exemple, il est supposé que 7 trames sont à recevoir.

Il est également prévu la partie de message de signalisation PMS dans chaque trame à recevoir.

L'étape de prévision est mise en oeuvre par analyse du message de signalisation MS.

Lors de la deuxième étape de réception, le récepteur 14 reçoit alors des nouvelles trames qui sont la quatrième trame $T_4$, la cinquième trame $T_5$, la sixième trame $T_6$, la septième trame $T_7$, la huitième trame $T_8$, la neuvième trame $T_9$ et la dixième trame $T_{10}$.

Pour chacune des nouvelles trames $T_4$, $T_5$, $T_6$, $T_7$, $T_8$, $T_9$ et $T_{10}$, le récepteur 14 met en oeuvre l'étape de vérification du contenu de la première section $S1_i$ de la nouvelle trame $T_i$ à l'aide de la partie de message de signalisation $PMS_i$ prévue.

L'étape de vérification du contenu est indépendante de la vérification de la troisième section S3 qui est systématiquement mise en oeuvre et fait partie, du fait de la normalisation imposée, de ce type de protocole de communication.

Selon un premier mode de réalisation, l'étape de vérification comporte une étape d'extraction de la donnée de signalisation $DS_i$ de la nouvelle trame $T_i$, pour obtenir une donnée de signalisation $DS_i$ extraite. L'étape de vérification comprend une étape de calcul de la partie de message de signalisation $PMS_i$ reçue à l'aide de la fonction f et la donnée de signalisation $DS_i$ extraite et une étape de comparaison de la partie de message de signalisation $PMS_i$ reçue avec la partie de message de signalisation $PMS_i$ prévue, pour obtenir un résultat. L'étape de vérification comporte une étape de sélection des trames parmi les nouvelles trames des trames pour lesquelles le résultat est une égalité.

Selon un deuxième mode de réalisation, l'étape de vérification comporte une étape de calcul de la donnée de signalisation $DS_i$ prévue à l'aide de la fonction f, de la partie de message de signalisation $PMS_i$ prévue et de la nouvelle trame $T_i$. L'étape de vérification est une étape d'extraction de la donnée de signalisation $DS_i$ de la nouvelle trame $T_i$, pour obtenir une donnée de signalisation $DS_i$ extraite et une étape de comparaison de la donnée de signalisation $DS_i$ extraite avec la donnée de signalisation $DS_i$ prévue. L'étape de vérification comporte une étape de sélection des trames parmi les nouvelles trames des trames pour lesquelles le résultat est une égalité.

Dans chacun des deux modes de réalisation, le récepteur 14 est capable de sélectionner les trames présentant une sécurité augmentée.

L'augmentation de la sécurité découle d'une simple analyse théorique du procédé proposé.

De fait, la probabilité d'accepter une trame erronée est de $2^{-(t+a)}$, t étant la taille de la première section S1 et a la taille de la troisième section S3. La probabilité est réduite d'un facteur $2^t$.

Le procédé de réception permet de réduire d'un facteur $2^t$ la probabilité qu'une trame erronée soit prise en compte, sans impacter la bande passante allouée pour la transmission des trames.

En effet, la taille des trames est conservée.

En ce sens, le procédé de réception correspond à une optimisation du compromis entre le niveau de sécurité et la bande passante dans le domaine radiofréquence sécurisé.

Il en découle que le procédé permet de limiter au mieux la probabilité qu'une trame erronée soit acceptée et l'impact d'un tel événement en termes de déni de service.

L'intérêt du procédé est d'autant plus important que le débit du système de communication 10 est faible.

Selon un autre mode de réalisation, la fonction g est la fonction identité. Par exemple, la sous-opération CRY donne toujours 0, et l'opération inversible f est un « ou exclusif ». Un autre exemple serait une multiplication modulaire pour l'opération inversible f par une sous-opération CRY donnant toujours la constante 1.

Dans ce cas, le récepteur 14 présente une résistance au déni de service accrue, reposant seulement sur le test de cohérence de la première section S1.

Comme les trames ne sont pas modifiées, la mise en oeuvre d'un tel procédé n'implique pas de modifier l'émetteur 12. Par exemple, une simple mise à jour de chaque récepteur 14 permet d'améliorer les performances de récepteur mettant en oeuvre des procédés selon l'état de la technique. Un tel procédé est donc aisé à mettre en oeuvre.

## Revendications

1. Procédé de réception d'un message diffusé (MD) en radiofréquence et réparti sur une pluralité de trames,

    chaque trame ayant une taille prédéfinie et comportant trois sections (S1, S2, S3) distinctes, à savoir :

      - une première section (S1),
      - une deuxième section (S2) allouée à une partie utile (PU), et
      - une troisième section (S3) allouée à un message d'authentification (MA),

    un message de signalisation (MS) permettant de lire la partie utile (PU) des trames pour reconstituer le message diffusé (MD), le message de signalisation (MS) étant un ensemble d'informations permettant de lire la partie utile (PU) des trames pour reconstituer le message diffusé (MD), le message de signalisation (MS) étant un ensemble de parties du message de signalisation (PMS), le nombre de parties du message de signalisation (PMS) étant plus faible que le nombre de trames sur lesquelles le message diffusé (MD) est réparti, l'ensemble des parties du message de signalisation (PMS) étant dans les trames initiales de sorte que le message de signalisation (MS) peut être reconstitué à partir de ces trames initiales, l'ensemble d'informations du message de signalisation (MS) permettant également de prévoir la partie du message de signalisation (PMS) envoyée dans chaque trame,

    la première section (S1) étant allouée à une donnée de signalisation (DS), une donnée de signalisation (DS) étant une fonction (g) d'une partie du message de signalisation (PMS),

    le procédé comportant au moins une étape de :

      - réception de trames initiales pour obtenir des données de signalisation (DS),
      - reconstitution du message de signalisation (MS) à partir des trames initiales,
      - prévision du nombre de trames à recevoir pour reconstituer le message diffusé (MD) et de la partie du message de signalisation (PMS) dans chaque trame à recevoir,
      - réception de nouvelles trames, et
      - pour chaque nouvelle trame reçue, vérification du contenu de la première section (S1) de la nouvelle trame à l'aide de la partie du message de signalisation (PMS) prévue.

2. Procédé selon la revendication 1, dans lequel lors de l'étape de vérification, il est mis en oeuvre des étapes de :

      - extraction de la donnée de signalisation (DS) de la nouvelle trame, pour obtenir une donnée de signalisation (DS) extraite,
      - calcul de la partie du message de signalisation (PMS) reçue à l'aide de la fonction (f) et la donnée de signalisation (DS) extraite,
      - comparaison de la partie du message de signalisation (PMS) reçue avec la partie du message de signalisation (PMS) prévue, pour obtenir un résultat, et
      - sélection des trames parmi les nouvelles trames des trames pour lesquelles le résultat est une égalité.

3. Procédé selon la revendication 1, dans lequel lors de l'étape de vérification, il est mis en oeuvre des étapes de :

      - calcul de la donnée de signalisation (DS) prévue à l'aide de la fonction (g), de la partie du message de signalisation (PMS) prévue et de la nouvelle trame,
      - extraction de la donnée de signalisation (DS) de la nouvelle trame, pour obtenir une donnée de signalisation (DS) extraite,
      - comparaison de la donnée de signalisation (DS) extraite avec la donnée de signalisation (DS) prévue, et
- sélection des trames parmi les nouvelles trames des trames pour lesquelles le résultat est une égalité.

**4.** Procédé selon l'une quelconque des revendications 1 à 3, dans lequel la fonction (g) est la fonction identité.

**5.** Procédé selon l'une quelconque des revendications 1 à 4, dans lequel la fonction (g) est une opération inversible (f).

**6.** Procédé selon la revendication 5, dans lequel une opération logique de « ou exclusif », appliquée à la partie du message de signalisation (PMS) à transmettre et au résultat d'une sous-opération appliquée à une partie d'une trame.

**7.** Procédé selon la revendication 6, dans lequel la partie d'une trame est au moins l'une parmi une partie de la deuxième section (S2) et une partie de la troisième section (S3).

**8.** Procédé selon la revendication 6 ou 7, dans lequel la sous-opération est un motif d'authentification cryptographique.

**9.** Récepteur (14) propre à recevoir un message diffusé (MD) en radiofréquence et réparti sur une pluralité de trames,

chaque trame ayant une taille prédéfinie et comportant trois sections (S1, S2, S3) distinctes, à savoir :

- une première section (S1),
- une deuxième section (S2) allouée à une partie utile (PU), et
- une troisième section (S3) allouée à un message d'authentification (MA),

un message de signalisation (MS) permettant de lire la partie utile (PU) des trames pour reconstituer le message diffusé (MD), le message de signalisation (MS) étant un ensemble d'informations permettant de lire la partie utile (PU) des trames pour reconstituer le message diffusé (MD), le message de signalisation (MS) étant un ensemble de parties du message de signalisation (PMS), le nombre de parties du message de signalisation (PMS) étant plus faible que le nombre de trames sur lesquelles le message diffusé (MD) est réparti, l'ensemble des parties du message de signalisation (PMS) étant dans les trames initiales de sorte que le message de signalisation (MS) peut être reconstitué à partir de ces trames initiales, l'ensemble d'informations du message de signalisation (MS) permettant également de prévoir la partie du message de signalisation (PMS) envoyée dans chaque trame,
la première section (S1) étant allouée à une donnée de signalisation (DS), une donnée de signalisation (DS) étant une fonction (g) d'une partie du message de signalisation (PMS), le récepteur (14) étant adapté pour recevoir des trames initiales pour obtenir des données de signalisation (DS), reconstituer le message de signalisation (MS) à partir des trames initiales, prévoir le nombre de trames à recevoir pour reconstituer le message diffusé (MD) et la partie du message du signalisation (PMS) dans chaque trame à recevoir, recevoir de nouvelles trames et, pour chaque nouvelle trame reçue, vérifier le contenu de la première section (S1) de la nouvelle trame à l'aide de la partie du message de signalisation (PMS) prévue.

**10.** Emetteur (12) propre à diffuser un message diffusé (MD) en radiofréquence et réparti sur une pluralité de trames,

chaque trame ayant une taille prédéfinie et comportant trois sections (S1, S2, S3) distinctes, à savoir :

- une première section (S1),
- une deuxième section (S2) allouée à une partie utile (PU), et
- une troisième section (S3) allouée à un message d'authentification (MA),

un message de signalisation (MS) permettant de lire la partie utile (PU) des trames pour reconstituer le message diffusé (MD), le message de signalisation (MS) étant un ensemble d'informations permettant de lire la partie utile (PU) des trames pour reconstituer le message diffusé (MD), le message de signalisation (MS) étant un ensemble de parties du message de signalisation (PMS), le nombre de parties du message de signalisation (PMS) étant plus faible que le nombre de trames sur lesquelles le message diffusé (MD) est réparti, l'ensemble des parties du message de signalisation (PMS) étant dans les trames initiales de sorte que le message de signalisation (MS) peut être reconstitué à partir de ces trames initiales, l'ensemble d'informations du message de signalisation (MS) permettant également de prévoir la partie du message de signalisation (PMS) envoyée dans chaque trame,
la première section (S1) étant allouée à une donnée de signalisation (DS), une donnée de signalisation (DS) étant une fonction (g) d'une partie du message de signalisation (PMS), la fonction (g) est une opération inversible (f), notamment une opération logique de « ou exclusif », appliquée à la partie du message de signalisation (PMS) à transmettre et au résultat d'une sous-opération appliquée à une partie d'une trame.

**11.** Système de communication (10) comportant :

- un émetteur (12), l'émetteur (12) étant notamment selon la revendication 10, et
- au moins un récepteur (12) étant selon la revendication 9.

**Patentansprüche**

**1.** Verfahren zum Empfangen einer Nachricht, die in dem Radiofrequenzbereich gesendet (MD) und auf mehrere Datenblöcke verteilt wird,

wobei jeder Datenblöcke eine vordefinierte Größe aufweist und drei verschiedene Abschnitte (S1, S2, S3) umfasst, nämlich:

- einen ersten Abschnitt (S1),
- einen zweiten Abschnitt (S2), der einem Nutzteil (PU) zugewiesen ist, und
- einen dritten Abschnitt (S3), der einer Authentifizierungsnachricht (MA) zugewiesen ist,

eine Signalisierungsnachricht (MS), die es ermöglicht, den Nutzteil (PU) der Datenblöcke zu lesen, um die gesendete Nachricht (MD) zu rekonstruieren, wobei die Signalisierungsnachricht (MS) eine Gruppe von Informationen ist, die es ermöglicht, den Nutzteil (PU) der Datenblöcke zu lesen, um die gesendete Nachricht (MD) zu rekonstruieren, wobei die Signalisierungsnachricht (MS) eine Gruppe von Teilen der Signalisierungsnachricht (PMS) ist, wobei die Anzahl der Teile der Signalisierungsnachricht (PMS) geringer ist als die Anzahl an Datenblöcken, auf die die gesendete Nachricht (MD) verteilt wird, wobei sich die Gesamtheit der Teile der Signalisierungsnachricht (PMS) in den ursprünglichen Datenblöcke befindet, sodass die Signalisierungsnachricht (MS) anhand dieser ursprünglichen Datenblöcke rekonstruiert werden kann, wobei die Gesamtheit der Informationen der Signalisierungsnachricht (MS) auch die Vorhersage des Teils der Signalisierungsnachricht (PMS) ermöglicht, der in jedem Datenblöcke gesendet wird, wobei der erste Abschnitt (S1) Signalisierungsdaten (DS) zugewiesen ist, wobei Signalisierungsdaten (DS) eine Funktion (g) eines Teils der Signalisierungsnachricht (PMS) sind, das Verfahren umfassend mindestens einen folgenden Schritt:

- Empfangen von anfänglichen Datenblöcken, um Signalisierungsdaten (DS) zu erlangen,
- Rekonstruktion der Signalisierungsnachricht (MS) anhand der ursprünglichen Datenblöcke,
- Vorhersagen der Anzahl an Datenblöcken, die empfangen werden müssen, um die gesendete Nachricht (MD) und den Teil der Signalisierungsnachricht (PMS) in jedem zu empfangenden Datenblock wiederherzustellen,
- Empfangen neuer Datenblöcke und
- für jeden neu empfangenen Datenblock, Überprüfen des Inhalts des ersten Abschnitts (S1) des neuen Datenblocks mittels des vorgesehenen Teils der Signalisierungsnachricht (PMS).

**2.** Verfahren nach Anspruch 1, wobei beim Verifizierungsschritt folgende Schritte durchgeführt werden:

- Extrahieren der Signalisierungsdaten (DS) des neuen Datenblocks, um extrahierte Signalisierungsdaten (DS) zu erlangen,
- Berechnen des Teils der Signalisierungsnachricht (PMS), der mittels der Funktion (f) empfangen wurde, und der extrahierten Signalisierungsdaten (DS),
- Vergleichen des empfangenen Teils der Signalisierungsnachricht (PMS) mit dem erwarteten Teil der Signalisierungsnachricht (PMS), um ein Resultat zu erlangen, und
- Auswählen der Datenblöcke unter den neuen Datenblöcke der Datenblöcke, bei denen das Resultat ein Gleichstand ist.

**3.** Verfahren nach Anspruch 1, wobei bei dem Verifizierungsschritt folgende Schritte durchgeführt werden:

- Berechnen der erwarteten Signalisierungsdaten (DS) mittels der Funktion (g), des erwarteten Teils der Signalisierungsnachricht (PMS) und des neuen Datenblocks,
- Extrahieren der Signalisierungsdaten (DS) des neuen Datenblocks, um extrahierte Signalisierungsdaten (DS) zu erlangen,
- Vergleichen der extrahierten Signalisierungsdaten (DS) mit den erwarteten Signalisierungsdaten (DS), und
- Auswählen der Datenblöcke unter den neuen Datenblöcke der Datenblöcke, bei denen das Resultat ein Gleichstand ist.

**4.** Verfahren nach einem der Ansprüche 1 bis 3, wobei die Funktion (g) die Identitätsfunktion ist.

**5.** Verfahren nach einem der Ansprüche 1 bis 4, wobei die Funktion (g) eine invertierbare Operation (f) ist.

**6.** Verfahren nach Anspruch 5, wobei eine logische Operation von "oder ausschließlich", die auf den zu übertragenden Teil der Signalisierungsnachricht (PMS) und das Resultat einer Teiloperation angewendet wird, die auf einen Teil eines Datenblocks angewendet wird.

**7.** Verfahren nach Anspruch 6, wobei der Teil eines Datenblocks mindestens einer aus einem Teil des zweiten Abschnitts (S2) und einem Teil des dritten Abschnitts (S3) ist.

**8.** Verfahren nach Anspruch 6 oder 7, wobei die Teiloperation ein kryptografisches Authentifizierungsmuster ist.

**9.** Empfänger (14), der geeignet ist, eine Rundfunknachricht (MD) in Radiofrequenz zu empfangen, die auf eine Vielzahl von Datenblöcken verteilt ist,

wobei jeder Datenblöcke eine vordefinierte Größe aufweist und drei verschiedene Abschnitte (S1, S2, S3) umfasst, nämlich:

- einen ersten Abschnitt (S1),
- einen zweiten Abschnitt (S2), der einem Nutzteil (PU) zugewiesen ist, und
- einen dritten Abschnitt (S3), der einer Authentifizierungsnachricht (MA) zugewiesen ist,

eine Signalisierungsnachricht (MS), die es ermöglicht, den Nutzteil (PU) der Datenblöcke zu lesen, um die gesendete Nachricht (MD) zu rekonstruieren, wobei die Signalisierungsnachricht (MS) eine Gruppe von Informationen ist, die es ermöglicht, den Nutzteil (PU) der Datenblöcke zu lesen, um die gesendete Nachricht (MD) zu rekonstruieren, wobei die Signalisierungsnachricht (MS) eine Gruppe von Teilen der Signalisierungsnachricht (PMS) ist, wobei die Anzahl der Teile der Signalisierungsnachricht (PMS) geringer ist als die Anzahl an Datenblöcken, auf die die gesendete Nachricht (MD) verteilt wird, wobei sich die Gesamtheit der Teile der Signalisierungsnachricht (PMS) in den ursprünglichen Datenblöcke befindet, sodass die Signalisierungsnachricht (MS) anhand dieser ursprünglichen Datenblöcke rekonstruiert werden kann, wobei die Gesamtheit der Informationen der Signalisierungsnachricht (MS) auch die Vorhersage des Teils der Signalisierungsnachricht (PMS) ermöglicht, der in jedem Datenblöcke gesendet wird,
wobei der erste Abschnitt (S1) einem Signalisierungsdatum (DS) zugewiesen ist, wobei ein Signalisierungsdatum (DS) eine Funktion (g) eines Teils der Signalisierungsnachricht (PMS) ist, wobei der Empfänger (14) angepasst ist, um anfängliche Datenblöcke zu empfangen, um Signalisierungsdaten (DS) zu erlangen, die Signalisierungsnachricht (MS) aus den anfänglichen Datenblöcken zu rekonstituieren, die Anzahl der zu empfangenden Rahmen vorzusehen, um die gesendete Nachricht (MD) und den Teil der Signalisierungsnachricht (PMS) in jedem zu empfangenden Datenblock zu rekonstruieren, neue Datenblöcke zu empfangen und für jeden neu empfangenen Datenblock den Inhalt des ersten Abschnitts (S1) des neuen Datenblocks mittels des vorgesehenen Teils der Signalisierungsnachricht (PMS) zu überprüfen.

**10.** Sender (12), der geeignet ist, eine gesendete Nachricht (MD) in Radiofrequenz zu verbreiten und auf eine Vielzahl von Datenblöcken zu verteilen,
wobei jeder Datenblöcke eine vordefinierte Größe aufweist und drei verschiedene Abschnitte (S1, S2, S3) umfasst, nämlich:

- einen ersten Abschnitt (S1),
- einen zweiten Abschnitt (S2), der einem Nutzteil (PU) zugewiesen ist, und
- einen dritten Abschnitt (S3), der einer Authentifizierungsnachricht (MA) zugewiesen ist,
eine Signalisierungsnachricht (MS), die es ermöglicht, den Nutzteil (PU) der Datenblöcke zu lesen, um die gesendete Nachricht (MD) zu rekonstruieren, wobei die Signalisierungsnachricht (MS) eine Gruppe von Informationen ist, die es ermöglicht, den Nutzteil (PU) der Datenblöcke zu lesen, um die gesendete Nachricht (MD) zu rekonstruieren, wobei die Signalisierungsnachricht (MS) eine Gruppe von Teilen der Signalisierungsnachricht (PMS) ist, wobei die Anzahl der Teile der Signalisierungsnachricht (PMS) geringer ist als die Anzahl an Datenblöcken, auf die die gesendete Nachricht (MD) verteilt wird, wobei sich die Gesamtheit der Teile der Signalisierungsnachricht (PMS) in den ursprünglichen Datenblöcke befindet, sodass die Signalisierungsnachricht (MS) anhand dieser ursprünglichen Datenblöcke rekonstruiert werden kann, wobei die Gesamtheit der Informationen der Signalisierungsnachricht (MS) auch die Vorhersage des Teils der Signalisierungsnachricht (PMS) ermöglicht, der in jedem Datenblöcke gesendet wird,
wobei der erste Abschnitt (S1) Signalisierungsdaten (DS) zugewiesen ist, wobei Signalisierungsdaten (DS) eine Funktion (g) eines Teils der Signalisierungsnachricht (PMS) sind, die Funktion (g) eine invertierbare Operation (f) ist, insbesondere eine logische Operation von "oder ausschließlich", die auf den zu übertragenden Teil der Signalisierungsnachricht (PMS) und das Resultat einer Teiloperation angewendet wird, die auf einen Teil eines Datenblocks angewendet wird.

**11.** Kommunikationssystem (10), umfassend:

- einen Sender (12), wobei der Sender (12) insbesondere nach Anspruch 10 ist, und
- mindestens einen Empfänger (12), der nach Anspruch 9 ist.

**Claims**

**1.** A method for receiving a broadcast message (BM) in radio frequency and distributed over several frames,

each frame having a predefined size and comprising three distinct sections (S1, S2, S3), namely:

- a first section (S1),
- a second section (S2) allocated to a useful part (PU), and
- a third section (S3) allocated to an authentication message (MA),

a signalling message (SM) for reading the useful part (PU) of the frames to reconstitute the broadcast message (BM), the signalling message (SM) being a set of information for reading the useful part (PU) of the frames to reconstitute the broadcast message (BM), the signalling message (SM) being a set of parts of the signalling message (PSM), the number of parts of the signalling message (PSM) being lower than the number of frames on which the broadcast message (BM) is distributed, the set of parts of the signalling message (PSM) being in the initial frames so that the signalling message (SM) can be reconstructed from these initial frames, the set of information of the signalling message (SM) also allowing the part of the signalling message (PSM) sent in each frame to be predicted, the first section (S1) being allocated to signalling data (SD), signalling data (SD) being a function (g) of a part of the signalling message (PSM), the process comprising at least one step of:

- reception of initial frames to obtain signalling data (SD),

- reconstitution of the signalling message (SM) from the initial frames,
- prediction of the number of frames to be received to reconstitute the broadcast message (BM) and the portion of the signalling message (PSM) in each frame to be received,
- reception of new frames, and
- for each new frame received, verification of the content of the first section (S1) of the new frame using the planned part of the signalling message (PSM).

**2.** A method according to claim 1, in which, during the verification step, steps of:

- extraction of the signalling data (SD) from the new frame, to obtain extracted signalling data (SD),
- calculation of the part of the signal message (PSM) received using function (f) and the signal data (SD) extracted,
- comparing the received portion of the signalling message (PSM) with the expected portion of the signalling message (PSM) to obtain a result, and
- selection of frames from the new frames of frames for which the result is equality.

**3.** A method according to claim 1, in which, during the verification step, steps of:

- calculation of the planned signalling data (SD) using function (g), the planned signalling message part (PSM) and the new frame,
- extraction of the signalling data (SD) from the new frame, to obtain extracted signalling data (SD),
- comparison of the extracted signalling data (SD) with the planned signalling data (SD), and
- selection of frames from the new frames of frames for which the result is equality.

**4.** A method according to any one of claims 1 to 3, in which the function (g) is the identity function.

**5.** A method according to any one of claims 1 to 4, wherein the function (g) is an invertible operation (f), wherein the function (g) is an invertible operation (f).

**6.** A method according to claim 5, in which a logical operation of "or exclusive", applied to the part of the signalling message (PSM) to be transmitted and to the result of a sub-operation applied to a part of a frame.

**7.** A method according to claim 6, in which the part of a frame is at least one of a part of the second section (S2) and a part of the third section (S3).

8. A method according to claim 6 or 7, in which the sub-operation is a cryptographic authentication ground.

9. Receiver (14) capable of receiving a broadcast message (BM) in radio frequency and distributed over a plurality of frames,

    each frame having a predefined size and comprising three distinct sections (S1, S2, S3), namely:

        - a first section (S1),
        - a second section (S2) allocated to a useful part (PU), and
        - a third section (S3) allocated to an authentication message (MA),

    a signalling message (SM) for reading the useful part (PU) of the frames to reconstitute the broadcast message (BM), the signalling message (SM) being a set of information for reading the useful part (PU) of the frames to reconstitute the broadcast message (BM), the signalling message (SM) being a set of parts of the signalling message (PSM), the number of parts of the signalling message (PSM) being lower than the number of frames on which the broadcast message (BM) is distributed, the set of parts of the signalling message (PSM) being in the initial frames so that the signalling message (SM) can be reconstructed from these initial frames, the set of information of the signalling message (SM) also allowing the part of the signalling message (PSM) sent in each frame to be predicted, the first section (S1) being allocated to signalling data (SD), signalling data (SD) being a function (g) of a portion of the signalling message (PSM), the receiver (14) being adapted to receive initial frames to obtain signalling data (SD), reconstitute the signalling message (SM) from the initial frames, predict the number of frames to be received to reconstitute the broadcast message (BM) and the portion of the signalling message (PSM) in each frame to be received, receive new frames and, for each new frame received, verify the content of the first section (S1) of the new frame using the planned portion of the signalling message (PSM).

10. Transmitter (12) capable of broadcasting a broadcast message (BM) in radio frequency and distributed over several frames,
    each frame having a predefined size and comprising three distinct sections (S1, S2, S3), namely:

        - a first section (S1),
        - a second section (S2) allocated to a useful part (PU), and

    - a third section (S3) allocated to an authentication message (MA),
    a signalling message (SM) for reading the useful part (PU) of the frames to reconstitute the broadcast message (BM), the signalling message (SM) being a set of information for reading the useful part (PU) of the frames to reconstitute the broadcast message (BM), the signalling message (SM) being a set of parts of the signalling message (PSM), the number of parts of the signalling message (PSM) being lower than the number of frames on which the broadcast message (BM) is distributed, the set of parts of the signalling message (PSM) being in the initial frames so that the signalling message (SM) can be reconstructed from these initial frames, the set of information of the signalling message (SM) also allowing the part of the signalling message (PSM) sent in each frame to be predicted, the first section (S1) being allocated to signalling data (SD), signalling data (SD) being a function (g) of a part of the signalling message (PSM), the function (g) is an invertible operation (f), in particular a logical operation of "or exclusive", applied to the part of the signalling message (PSM) to be transmitted and to the result of a sub-operation applied to a part of a frame.

11. Communication system (10) comprising:

    - an issuer (12), the issuer (12) being in particular according to claim 10, and
    - at least one receiver (12) being as claimed in claim 9.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009154495 A1

- US 6804257 B1